# EUROPEAN PATENT APPLICATION

(11) **EP 4 741 315 A1**
(43) Date of publication of application: **13.05.2026**
(21) Application number: 24211821.4
(22) Date of filing: 08.11.2024
(51) Int. Cl.: B65G 1/04, B65D 21/02

(54) **A STORAGE GRID**

(71) Applicant: AutoStore Technology AS, 5578 Nedre Vats (NO)
(72) Inventor: Heggebø, Jørgen, 5578 Nedre Vats (NO)
(74) Representative: Kilburn & Strode LLP

(57) **Abstract**

The disclosure relates to a storage grid of an automated storage and retrieval system. The storage grid includes a vertical column for stacking stackable modules, and the vertical column has a vertical frame member comprising an interlocking element. The interlocking element may couple with a complementary interlocking element on a stackable module, in order to secure the stackable module to the vertical frame member when the stackable module is stored in the vertical column.

## Description

### TECHNICAL FIELD

The disclosure relates to a storage grid for an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Another example use of an automated storage and retrieval system is vertical farming in which storage containers within the system can be used to grow and/or store organisms (e.g., crops, plants, or other biological matter). One known vertical farming system uses frames which serve as stackable modules to be stored one on top of another in a vertical stack.

The storage containers or stackable modules are usually stacked in a self-supporting manner in vertical columns of the storage grid, and are sized to fit securely within the framework of each vertical column. In use, the containers are individually retrieved or relocated, as required, between vertical columns and/or an access point of the storage grid. For example, when an accessed container is returned to the grid, it is stored at the top layer of the grid. As a result, over time, 'slow moving' containers descend to the bottom of the stack whilst more frequently accessed containers naturally remain at a more accessible layer near the top of the grid.

To facilitate rearrangement within the grid, containers and stackable modules are usually uniform or have standard dimensions so that any module may stack with any other module in the grid, and so that each module may be positioned in any vertical column in the grid.

### SUMMARY

The present disclosure identifies that problems with existing automated storage and retrieval systems may include a high material cost in constructing a suitable storage grid, a limited flexibility in storage configurations, and limitations due to standardisation requirements on storage containers (e.g., to adhere to the grid specification). The present disclosure relates to systems and methods for securing and/or storing stackable modules in a storage grid which address these problems.

One or more aspects of the presently claimed invention are set out in the independent claims. Additional aspects and features of the presently claimed invention are set out in the dependent claims and in the description below.

### BRIEF DESCRIPTION OF THE DRAWINGS

The disclosure will now be described in more detail below and in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a portion of the grid of Fig. 1 containing multi-container frames;
Fig. 6A and 6B each show a storage grid containing interlocking elements for securing storage containers;
Fig. 7A shows a perspective view of a vertical column in the storage grid of Fig. 6B;
Fig. 7B shows a top view of a storage container for the storage grid of Fig. 6B
Figs. 8A and 8B show top views of alternative complementary interlocking elements for the vertical column of Fig. 7;
Figs. 9A shows a storage container having an interlocking element;
Figs. 9B to 9D show example implementations of the storage container of Fig. 9A in a vertical column;
Figs. 10A and 10B show an implementation of interlocking elements in a storage grid;
Figs. 11A to 11C show implementations of interlocking elements in a vertical farming arrangement;
Fig. 12A shows a perspective view of two standard multi-container frames for use in the arrangement of Fig. 5;
Fig. 12B-D show implementations of interlocking elements with multi-container frames, for use in the arrangement of Fig. 5; and
Fig. 13 shows a method of storing a storage container or stackable module in a storage grid.
Like reference numerals are used to demonstrate like components throughout the drawings.

### DETAILED DESCRIPTION

### Overview of the disclosure

The disclosure relates to a storage grid of an automated storage and retrieval system, comprising a vertical column for storing stackable modules. The vertical column is provided with at least one vertical frame member having an interlocking element configured to couple with or grip a stackable module, preferably by coupling with a complementary interlocking element provided on the stackable module. When coupled, the interlocking elements resist separation and secure the stackable module to the vertical frame member. The interlocking elements are preferably configured to resist movement relative to the vertical frame member in at least a horizontal direction, such that the stackable module is prevented from twisting, falling away from, being pulled from, or being knocked away from the vertical frame member in at least the horizontal direction. The coupled interlocking elements therefore provide a secure positioning for the stackable module when the stackable module is stored in the grid. Preferably, the interlocking element allows the complementary interlocking element to slide vertically but otherwise resist movement. For example, the interlocking mechanism may act only in a horizontal direction, such that the stackable module may be vertically lowered into, and vertically retrieved out of, the column during operation of the storage system.

The vertical frame member may be positioned along a perimeter of the vertical column, with the interlocking element facing into the vertical column such as to couple with at least an edge or a corner of a stackable module. By coupling at a perimeter of the column, invasiveness into the storage space of the vertical column is minimised, thereby maximising the potential size of the stackable module. Alternatively, the vertical frame member can be positioned in an inner portion of the vertical column. To couple the interlocking members in such examples, the corresponding interlocking element is provided in an opening of the stackable module, or an accessible region is provided in the vertical column, for the vertical frame member, around which to fit and couple the stackable modules.

The vertical frame member may exist either in addition to, or as an integrated part of, a supporting vertical framework for the vertical column. For example, the vertical frame member may act as a replacement for the (existing) supporting vertical framework of a storage grid. In other words, a vertical column may be defined by the at least one vertical frame members described herein, therefore removing the need for additional vertical struts in the storage grid and saving on material costs.

The interlocking element of the vertical frame member may be implemented in many different suitable forms. In some examples, the interlocking element comprises a protrusion which is configured to couple with a recess of a complementary interlocking element. A protrusion on the frame member may provide an increased overall strength of frame member (e.g., due to the increased surface area), and be more easily manufacturable, particularly on existing grid frames, and therefore may offer good retrofitting capabilities with existing systems.

In other examples, the interlocking element comprises a recess which is configured to couple with (i.e., receive) a protrusion of the complementary interlocking element. By providing vertical frame members with a recess, the vertical members comprise less material and costs are reduced.

The protrusion or recess of the vertical frame member preferably extends along most or all of the vertical length of the vertical frame member, such that the interlocking element remains coupled with the stackable module along the vertical length of the vertical column. The protrusion and recess are shaped to resist movement in a horizontal plane when the vertical frame member and the stackable module are coupled. Thus, when a protrusion and a recess are coupled together in a vertical column, the resulting arrangement allows movement of the stackable module along the vertical axis of the vertical column, whilst resisting or limiting movement of the stackable module in the horizontal plane.

The disclosure also relates to a stackable module for stacking in a vertical column of an automated storage and retrieval system. The stackable module comprises an interlocking element positioned on an exterior side wall or corner of the stackable module. The interlocking element faces outwards and is configured to couple with a complementary interlocking element of a vertical frame member. The vertical frame member may be part of the framework of a vertical column, as discussed above. Additionally or alternatively, the vertical frame member may be provided in a multi-container frame, in order to provide a nested storage for stackable modules within a storage grid, as described in more detail below. In either case, the interlocking element is configured to resist movement in at least a horizontal direction, such that the stackable module is prevented from twisting and falling away from, being pulled from, or being knocked away from the vertical frame member. Thus, by coupling the interlocking elements, the stackable module may be secured to the vertical frame member when the stackable module is stored in a vertical column.

The stackable module may be any suitable module for use in an automated storage and retrieval system. For example, the stackable module may be a bin, a storage container, a multi-container frame, a container for use inside a multi-container frame, or a vertical farming module, such as a growth board, a plant bed, a light source, a heat source, or a fluid source.

The interlocking element of the stackable module can also take on many suitable forms. In some examples, the interlocking element of the stackable module comprises a protrusion configured to couple with a recess of a complementary interlocking element. The protrusion, which extends outwardly from an exterior wall of the stackable module, advantageously minimises the invasiveness of the interlocking element in the module itself. For example, by providing the interlocking element projecting away from the exterior of a storage container, the storage volume of the storage container is uncompromised.

In other examples, the interlocking element of the stackable module comprises a recess which is configured to couple with (i.e., receive) a protrusion of the complementary interlocking element. By providing a stackable module with a recess, the modules may be sturdier, more compact, and have less risk of snagging during operation, e.g., with robots or other components of the storage grid. It will be appreciated that other forms of interlocking element are possible, such as magnets, latches, or other suitable known connectors.

The present disclosure also relates to a multi-container frame, or 'stacker frame', for stacking in a vertical column of an automated storage and retrieval system. The multi-container frame comprises a vertical frame member positioned on an interior wall of the multi-container frame. The vertical frame member may be configured in substantially the same way as any of the vertical frame members discussed herein. In particular, the frame member comprises an interlocking element which is configured to couple with a complementary interlocking element of a stackable module. The interlocking element, when coupled, resists separation of the stackable module from the vertical member of the multi-container frame in order to secure the stackable module to the multi-container frame when the stackable module is stored in the multi-container frame. The multi-container frame may be stored and handled in the same manner as any of the other storage containers disclosed herein, as discussed in more detail below.

The disclosure further relates to an automated storage and retrieval system comprising a storage grid and the stackable module as discussed herein. In particular, the stackable module is a stackable module having an interlocking element configured to couple with a complementary interlocking element on a vertical frame member. The vertical frame member may be, for example, a frame member of a storage grid column or a frame member of a larger multi-container frame. In some examples, the horizontal surface area of the stackable module is less than a horizontal surface area of the vertical column, or of the multi-container frame, in which the module is stored. For example, the stackable module may have a surface area along a horizontal plane which is 10% or less, 25% or less, or 50% or less, than the surface area of the vertical column/multi-container frame in the horizontal plane in which the module is stored. Furthermore, in such examples, two or more stackable modules may be stackable horizontally adjacent in the same vertical column, i.e., on first and second frame members, respectively, which are provided in the same vertical column or multi-container frame.

Finally, the disclosure also relates to a method of stacking any of the stackable modules discussed herein in a storage grid. The method comprises vertically aligning an interlocking element of the stackable module with a complementary interlocking element of a vertical frame member. The vertical frame member may be a frame member of a vertical column, as discussed above, or it may be the frame member of a multi-container frame nested within a vertical column. The vertical alignment may be done automatically by a robotic vehicle which is carrying the stackable module above the storage grid (and thus above the vertical column comprising the vertical frame member). In particular, the vertical frame member may be arranged such that the positioning of a robotic vehicle directly above an access opening of the storage grid aligns the interlocking element(s) of the stackable module with the corresponding one or more interlocking elements of the vertical frame member. Alternative suitable means of aligning the interlocking elements using the robotic vehicles would also be known to the person skilled in the art, such as by using sensors to detect a respective location between two target interlocking elements, or physical guides at the top of the vertical frame members (such as tapered edges). The robotic vehicle may be specially configured (e.g., sized) to carry and align a specific (e.g., corresponding) size of storage container, or alternatively the robotic vehicle may be configured to accommodate multiple different size of storage container, such as disclosed in Norwegian patent application NO20221359, which is incorporated herein by reference in its entirety.

Once the interlocking elements are vertically aligned, the method proceeds to lowering, with a robotic vehicle, the stackable module into the vertical column. Lowering the module allows the interlocking element of the stackable module to couple onto or with the complementary interlocking element of the vertical frame member (e.g., by lowering the protrusion to fit within the recess). The coupled interlocking elements resist at least horizontal movement of the stackable module relative to the frame member, therefore allowing a secure storage of the stackable module in the vertical column even after the robotic vehicle has released the stackable module.

### Automated storage and retrieval system overview

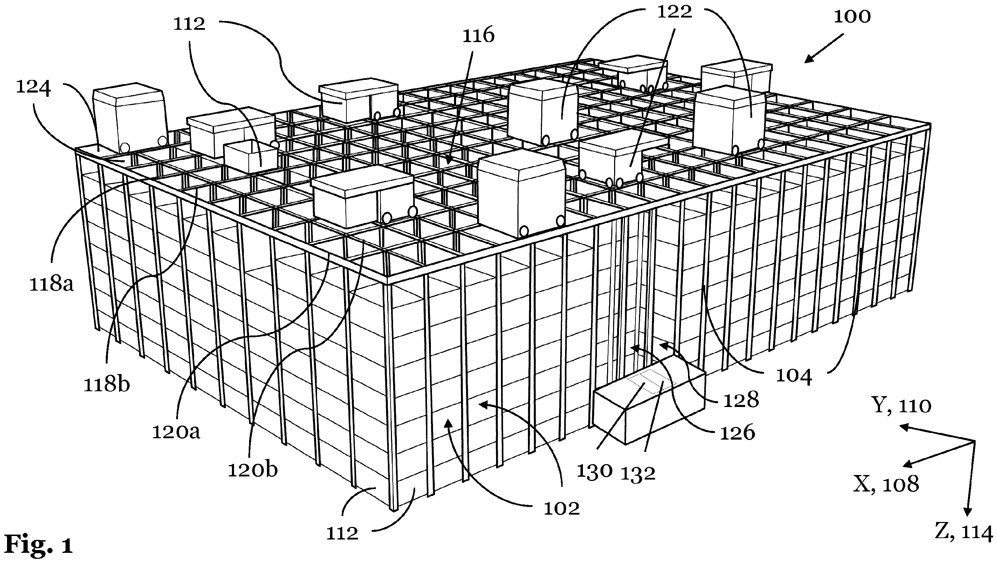

Referring to the embodiment shown in Fig. 1, a grid 100 comprises a frame formed by a plurality of generally rectilinear, adjacent vertical columns 102 formed between or adjacent to vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape, and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts, or robots.

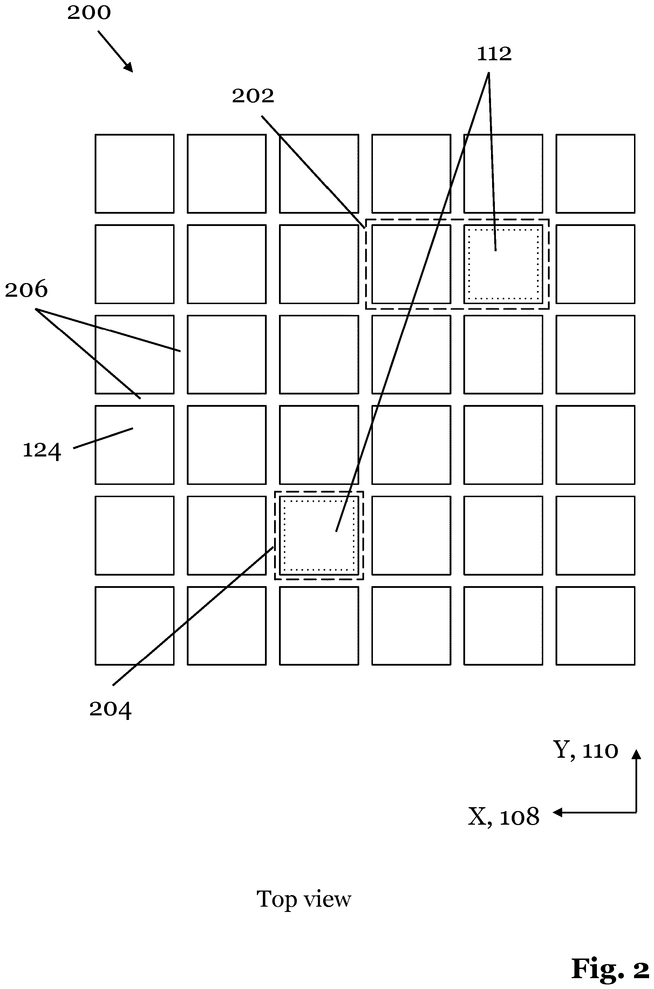

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

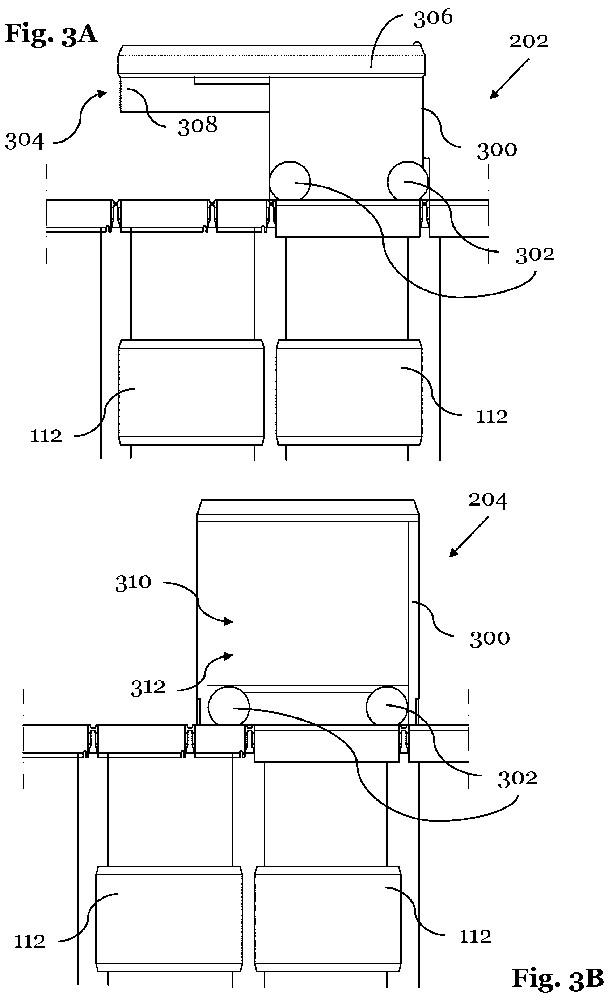

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

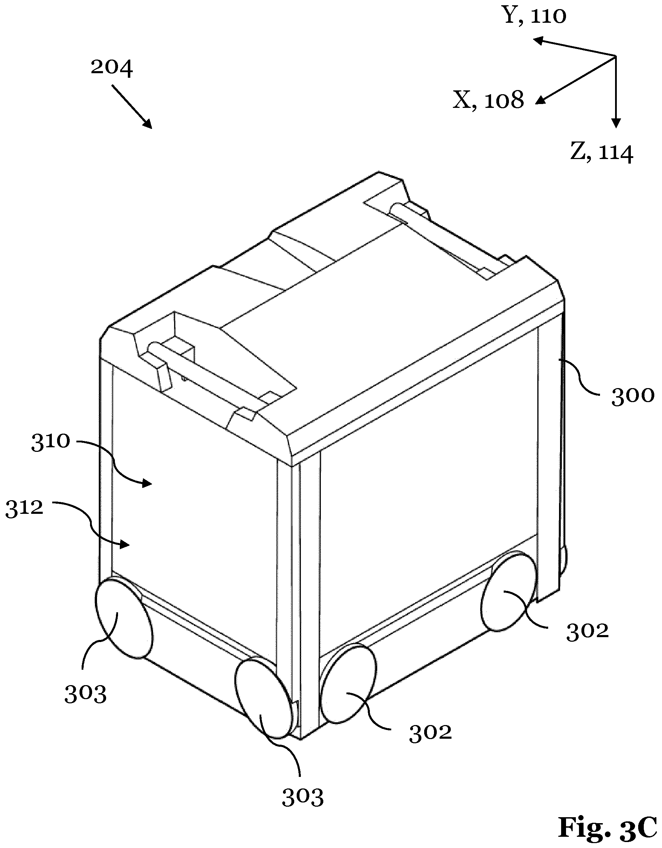

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

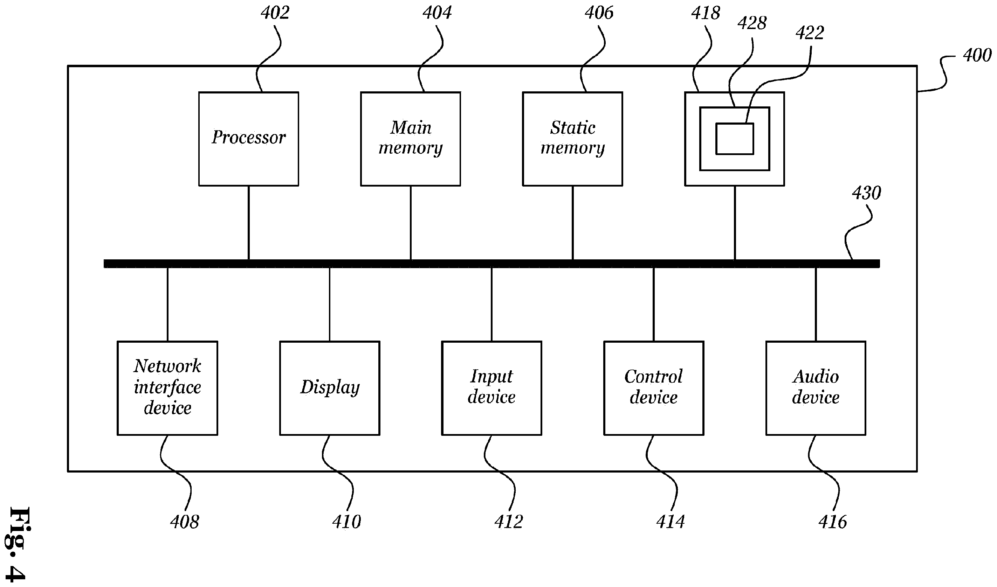

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code, or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips, and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary, as discussed above.

### Multi-container frames

The present disclosure may also relate to multi-container frames, in other words frames or containers that are themselves configured to hold a plurality of other, smaller containers. These multi-container frames can be stored and handled in the automated storage and retrieval system of the present disclosure in the same manner as the storage containers 112 referenced above in relation to Figs 1-4. Accordingly, multi-container frames represent an example implementation of the storage containers 112 described above and shown in Figs. 1, 2, 3A and 3B. A multi-container frame may be configured to accommodate between two and six containers in a typical implementation, although larger multi-container frames are possible.

In some implementations of the present disclosure, the multi-container frames are configured to accommodate a plurality of bins or containers within them, stacked one on top of another. In that case, the multi-container frame may be referred to as a "stacker frame" because the containers held within it are stacked on top of one another. For simplicity, the remainder of this description will focus on this form of multi-container frame. However, it will be appreciated that in other implementations (not shown in the accompanying Figures), the multi-container frame may accommodate a plurality of containers side-by-side or otherwise arranged, and the containers may not be stacked on top of one another within the multi-container frame. Accordingly, while the remainder of this disclosure focuses on stacker frames, this is not to be considered as limiting and the present invention relates to any form of multi-container frame configured to accommodate a plurality of containers within it.

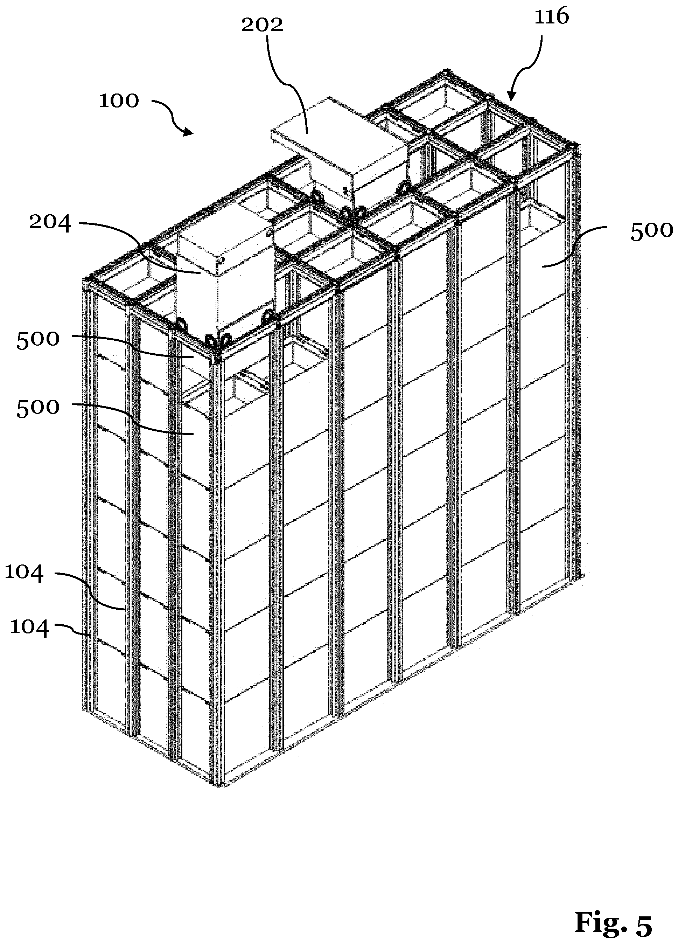

Turning now to Fig. 5, this figure shows a subsection of the automated storage and retrieval system shown in Fig. 1. A portion of the grid 100 can be seen together with robotic container-handling vehicles 202, 204 operating on the rail system 116. In the system shown in Fig. 5, the storage containers 112 stored in the visible portion of the grid 100 are multi-container frames 500. As noted above, in this implementation the multi-container frames 500 are all stacker frames 500, within which the smaller containers are stored one on top of the other. Accordingly, for simplicity, the phrase "stacker frame" will be used hereafter. However, the following description applies to any form of multi-container frame.

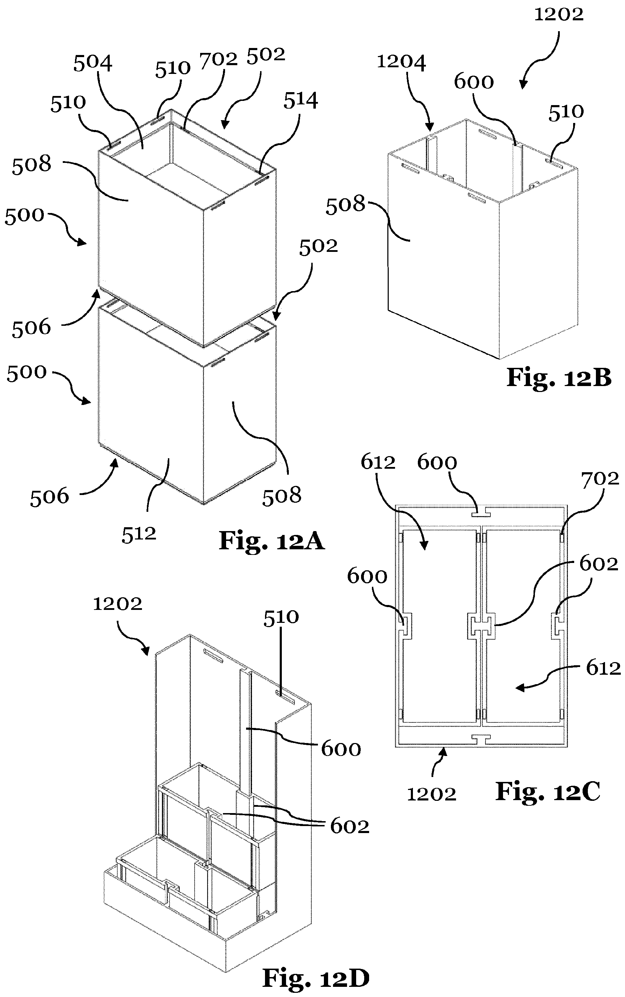

As can be seen from Fig. 5, one of the stacker frames 500 is in the process of being lifted by container-handling vehicle 204. This lifting is performed in a similar manner as discussed above in relation to the containers 112 of Fig. 1 and the lifting mechanisms discussed in relation to Figs. 3B and 3C. Further details of how stacker frames 500 can be lifted will be described below with regard to Figs. 12A-D.

### Vertical farming applications

In some implementations, the automated storage and retrieval system may be arranged to store organisms. For example, containers in a storage grid may store organisms, or the automated storage and retrieval system may be arranged as a vertical farming system for growing organisms in receptacles (containers, stacker frames, or stackable modules) that can be stacked in the vertical columns of a storage grid, and which can be lifted, lowered and transported by robotic container-handling vehicles. It is important to ensure that organisms stored within an such systems receive, for example, adequate nutrition and ventilation, that they are stored in an appropriate temperature and climate, so that organisms are meeting an expected growth and/or development rate. Examples of organisms suitable for growth or development in the vertical farming system include crops or plants of any variety suitable for growth or development in a vertical farming environment, including but not limited to vegetables, herbs, fruit, medicinal plants, or fungi. However, the present disclosure is not limited thereto, and organisms may alternatively include other organisms suitable for growth in a vertical farming environment, such as biological tissues or insects.

Containers (or bins) for use in a vertical farming system may be of the type described with reference to the automated storage and retrieval system of Fig. 1. Alternatively, the containers may be a subcomponent of stackable modules deployed in stacks within columns of a framework structure (e.g., storage grid), such as that described with reference to Fig. 1 or Fig. 5. The stackable modules are used as building blocks to build vertical farming columns within the framework structure. The columns are analogous to the vertical columns of the previously described automated storage and retrieval systems, e.g., as illustrated in Fig. 1. Features referred to in relation to the storage containers or bins of the automated storage and retrieval system, e.g., as described in relation to figures 1 to 4, apply equally to the stackable modules except where described elsewhere herein. Robotic container-handling vehicles such as those described with reference to Figs. 1-5 may be arranged to carry/ transport the stackable modules in the same way that a container or bin of the automated storage and retrieval system is carried.

The stackable modules may comprise support members for supporting functional elements (containers) required for plant or organism growth. An example of such a container is a growth board (e.g., vertically arranged) for growing the organisms or a plate member (e.g., vertically arranged) for supporting other functional components, like sources of light, heat, fluids, or air movement. The growth board is as an example of a container of sorts which is carried/ transported by the robotic container-handling vehicle as part of the stackable modules. Alternatively, the stackable modules themselves, together with the growth boards, may be described as containers.

### Interlocking Elements

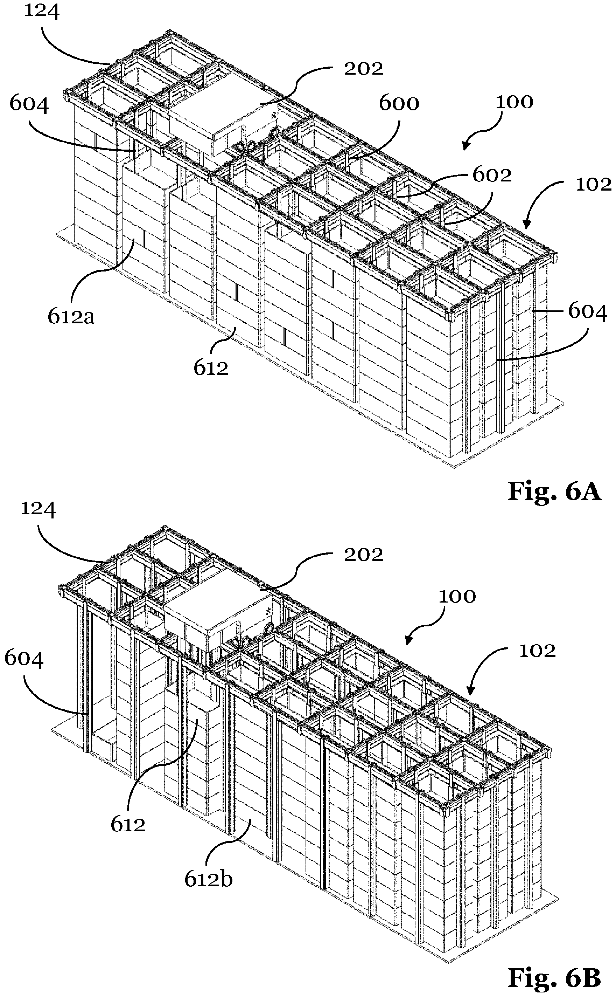

Referring now to Fig. 6A and 6B, a grid 100 comprises a frame having a plurality of access openings 124 at a top of the grid 100, and vertical columns 102 for storing storage containers 612. The columns 102 are formed generally between or adjacent to vertical frame members 604. The vertical frame members 604 comprise an interlocking element 600, which in this examples takes the form of a T-shaped protrusion, which extends along the vertical length of the vertical frame member 604 in order to secure storage containers 612 at all vertical locations (i.e., any location in a stack) within the vertical column 102.

In Figs. 6A and 6B, all vertical frame members 604 are provided with protrusions 600 and are positioned in a central portion along an edge of the vertical columns in order to facilitate an even weight distribution when the protrusion 600 are coupled with the storage containers 612. The vertical frame members 604, with the interlocking elements, secure and align the storage containers 612 within the vertical columns without the need for any other alignment means and supports, such as corner posts of the vertical columns shown in Fig. 1 (i.e., the vertical frame members 104). In other words, the corner posts or vertical members 104 of Fig. 1 can be replaced by the modified vertical frame members 104, offering potential material savings and a simplified grid structure. In particular, the requirement for four corner posts 104 in each vertical column 102 of the grid 100 of Fig. 1, to support the stacks of containers 112, may be substantially done away with due to the interlocking elements of the vertical frame members 604. For example, in Fig. 6A, only two vertical frame members 604 are provided in each vertical column 102, which may result in a net saving of material costs (for example, because fewer vertical frame members are required around the edges of the grid 100).

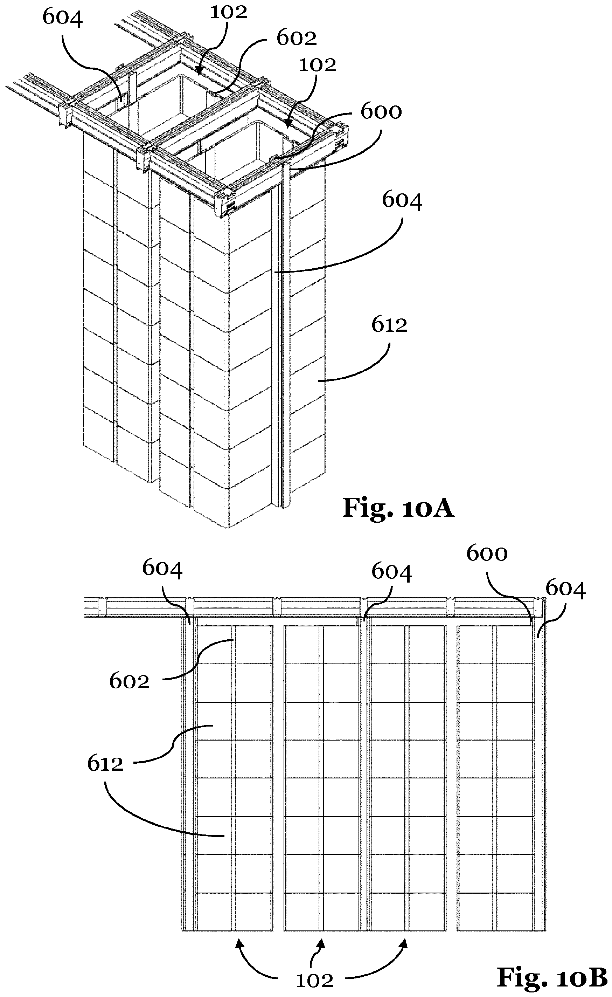

In some examples, a vertical frame member is provided with two or four interlocking elements which each face, respectively, into adjacent vertical columns 102. With reference to Figs. 6A and 6B, each vertical frame member comprises oppositely facing protrusions 600 which extend into adjacent vertical columns 102. In this way, the vertical frame members 604 can be 'shared' between respective vertical columns 102, resulting in a reduction in material costs, as discussed in more detail with regard to Figs. 10A and 10B. Nevertheless, it will be appreciated that corner posts (vertical members 104) may be retained in addition to the modified vertical frame members 604, such as to provide additional support to the grid 100 or rail system 116.

The protrusion 600 on each vertical frame member 604 extends along the length of the vertical frame member 604 in the vertical columns 102, such that the protrusion 600 is able to vertically receive and couple with a recess 602 of a storage container 612, allowing the frame member to secure the storage container 612 within the vertical column 102, i.e., without requiring any further support or alignment from additional vertical frame members 104 (or corner posts) and without requiring uniform support from lower containers 612 in the stack.

The storage containers 612 are stacked vertically on top of each other in the vertical columns 102, and each container in the stack of containers are interlocked with, and secured to, respective vertical frame members 604 in the vertical column 102. In particular, each of the containers 612, 612a, 612b comprise at least one complementary interlocking element 602, which in this example takes the form a T-shaped recess, which couples with the corresponding protrusion 600 of the vertical frame member 604 adjacent to the container to provide a securing force when the container is stacked in the vertical column which prevents movement of container in a horizontal plane. The recess 602 extends along the vertical length of each of the storage containers 612, such that the containers may slide along the vertical length of the protrusion 600.

By securing the storage containers to the vertical frame members in this manner, the interlocking elements reduce the requirement for standardised dimensions in the grid, thereby vastly improving the flexibility in storage configurations and adaptability to specific warehousing needs. In particular, with regard to Figs. 6A and 6B, the storage containers 612 need not all align and adhere to the horizontal dimensions of the vertical column 102 or access opening 124, but can have any shape that fits within the vertical column 102, so long as the container 612, 612a, 612b comprises a recess 602 to couple with the protrusion 600 of the vertical frame member 604. Furthermore, by providing multiple interlocking elements 600 in the same vertical column 102 (i.e., with multiple vertical frame members 604), multiple storage containers 612a, 612b can be stacked, horizontally adjacent to other storage container 612a, 612b, in the same vertical column 102.

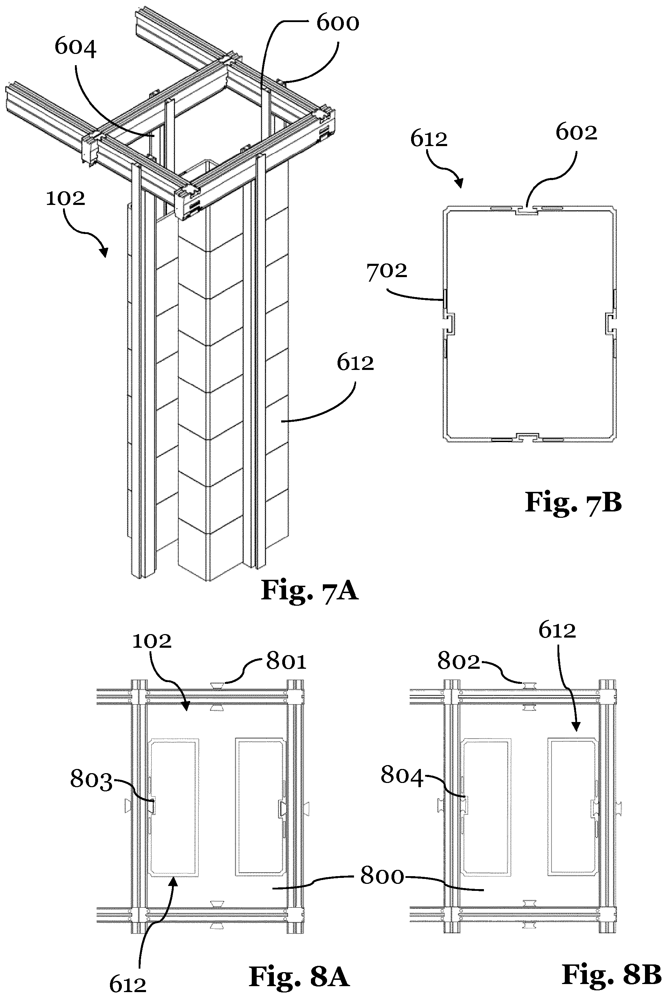

Storage containers 612, such as those shown in Figs. 6A and 6B, suitable for securing with a vertical frame member, may come in various shapes and sizes. Fig. 7B illustrates a full-size storage container 612, which may be similar in proportion to the storage containers 112 of Fig. 1, comprising multiple T-shaped recesses 602 for interlocking with corresponding protrusions 600 in a vertical column 102. The T-shaped recesses 602 prevent lateral or rotational movement of the storage container 612 in a horizontal plane. Additionally, securing the container 612 with multiple interlocking elements (multiple T-shaped protrusions 600) may provide an increased stability and security for the storage container 612 in the column 102.

The container 612, as illustrated in Fig. 7B, has substantially the same horizontal surface area as the horizontal surface area of the vertical column 102, thereby optimising the storage volume available to the container 612. Storage volume in a vertical column 102 may also be optimised by stacking multiple smaller containers 612a, 612b horizontally adjacent to one another in the same vertical column, as shown in Figs. 6A and 6B. In particular, Figs. 6A and 6B illustrate two options for half-size storage containers 612a and 612b, which each occupy half of the surface area in a horizontal plane of a vertical column 102 and therefore may be stacked horizontally adjacent to a similar half-size container 612a, 612b in the same vertical column 102. For example, in Fig. 6A, there are two vertical frame members 604 for each of the vertical columns 102. In either case, each vertical column 102 can accommodate a stack of full-size storage containers 612, half size storage containers 612a, 612b, or a combination of storage containers 612, in any suitable configuration.

It will be appreciated that the storage containers 612, rather than being half-sized as shown in Figs. 6A and 6B, may instead be any proportion relative to a horizontal surface area of the vertical column 102, such as less than 10%, less than 20%, or less than 25%, or more than 50%. In such examples, interlocking elements may be configured, between both container and vertical column, to allow stacking of variously sized storage containers 612 horizontally next to each other within a vertical column 102, in order to substantially fill the storage volume of the vertical column 102. In other examples, best shown in Figs. 7A, 8A, and 8B, smaller storage containers 612 may be stacked within a vertical column in such a way as to allow a gap 800 to extend within the vertical column 102 and/or through the stack vertical stack of containers 612.

Storage containers 612 of various different sizes may be handled by standard robotic vehicles or cranes using any of various methods known in the art. For example, the storage containers 612 may comprise engagement portions 702 configured to be gripped or engaged by robotic vehicles for handling, in a similar manner as in Fig. 1. For example, specifically sized/configured robotic vehicles may be used for correspondingly sized containers, or specialist robotic vehicles may be used which can accommodate differently sized containers, such as disclosed in NO20221359, which is incorporated herein by reference in its entirety.

To facilitate flexibility in stacking storage containers 612 of different sizes and shapes, and in various configurations within the grid 100, the vertical columns 102 may comprise a plurality of vertical members 604. Fig. 7A shows a perspective view of one such vertical column 102, in which four vertical frame members 604 are provided. As shown in Fig. 7A, the four frame members 604 (and thus the four interlocking elements 600) accommodates two parallel stacks of small storage containers 612. However, it will be appreciated that in the illustrated configuration, up to four parallel stacks of storage containers could be stored within the vertical column 102. Similarly, 'full sized' containers may be interspersed within, or replace, the parallel stacks of smaller containers shown in Fig. 7A. For example, Fig. 7B illustrates a storage container 612 comprising four recesses 602 on each side wall of the container, which may be coupled, respectively, with each of the four vertical frame members 604, and thus this container may also be stored in the vertical column 102 of Fig. 7A.

Generally, a vertical column 102 may comprise two or more vertical frame members 604 spaced along a perimeter of the vertical column to facilitate the horizontal stacking within a vertical column. In preferred examples, the vertical frame members 604 are positioned respectively on opposite faces along a perimeter of the vertical columns 102 (e.g., symmetrically), as shown in Figs. 6A and 6B. By providing interlocking elements 602 on opposite faces of a vertical column 102, the vertical column may either secure multiple storage containers 612a, 612b with each of the respective interlocking elements 602 in the same horizontal plane, or secure one storage container 612 across some or all interlocking elements 602 in the same horizontal plane for increased stability. Similarly, by providing the two or four interlocking elements 602 symmetrically around a vertical column 102, and/or by providing the interlocking elements 604 symmetrically around a storage container 612, there is a reduced need to consider the relative orientations of the storage containers and the vertical columns (as may be required for the alignment of respective interlocking elements) during handling of the containers, which improves handling efficiency during operation of the storage system.

Whilst Figs. 6A and 6B illustrate the protrusion 600 having a T-shape, it will be appreciated that other shapes and forms of protrusion will work to resist horizontal movement of a complementary recess, whilst allowing the recess to slide up and down the protrusion for vertical handling of a storage container with a robotic vehicle. Figs. 8A and 8B illustrate two such example protrusions 801 and 802, which interlock with complementary recesses 803 and 804. In all cases, the protrusion 600, 801, 802, comprises a wider rim, a flange, a taper, a latch, or other connector which preferably resists movement or detachment of the complementary interlocking element, at least in a horizontal plane, in order to secure the storage container to the vertical frame member.

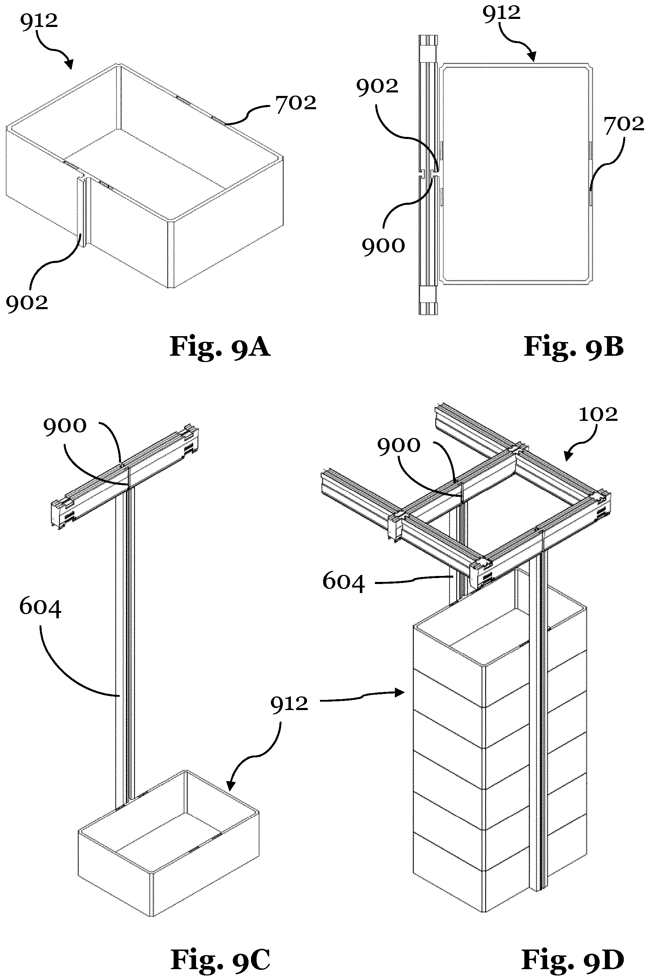

Furthermore, in any of the examples discussed herein, the protrusion and the recess may be switched as necessary between storage container (or stackable module) and vertical frame member. Such a switch may involve no changes being made to the other features of the respective components, and, in both configurations, the function of the interlocking element is the same. For example, Fig. 9 illustrates a storage container 912 comprising an interlocking element in the form of a protrusion 902 which is configured to couple with a recess 900 of a vertical frame member 604, as illustrated in Figs. 9B-D. The protrusion 902 extends horizontally away from an exterior surface of the storage container 912, therefore avoiding impacting the available storage volume in the storage container 912. The protrusion 900 may extend the vertical length of the storage container 912, as shown in Fig. 9A, to provide greater stability. In another example, not shown, the protrusion 900 is only provided at or along a portion of the height of the storage container 912.

As discussed above, a vertical frame member may comprise two interlocking elements facing into different vertical columns, such that the same vertical frame member 604 serves both vertical columns and is configured to secure stackable modules in both vertical columns. For example, Fig. 10A illustrates a vertical frame member 604 which comprises two oppositely facing protrusions 600 extending into adjacent vertical columns 102. This 'sharing' of a frame member between vertical columns allows for a further saving of material cost, by minimising the number of vertical frame members required in the grid. For example, as best shown in Fig. 10B, the vertical frame members 604 of Fig. 10A maybe spaced two vertical columns 102 apart from one another along one axis, such that each vertical column comprises one, and only one, interlocking element for securing storage containers 612. Because vertical frame members are more dispersed through the storage grid, this results in a large reduction in the total number of vertical frame members in the storage grid, thus saving on material cost without issues with alignment or security of the storage containers. Furthermore, the storage containers 612 comprise multiple recesses 602 (as shown in Fig. 7B) so that they may be stacked in any of the vertical columns of Fig. 10B without requiring a change in orientation.

The principle of reducing the required material cost also be taken further. In one implementation, not shown, a vertical frame member comprises four interlocking elements, perpendicular to each other. The frame member is positioned as a corner post, at a shared vertex of four vertical columns, such that each of the four interlocking elements face diagonally into the vertical column. The vertical frame member may then be spaced two vertical columns apart in both an X and a Y axis along the grid, thereby further reducing the total number of vertical frame members in the grid. It will be appreciated that corresponding storage containers would be provided with sufficiently strong interlocking elements at each corner of the storage container, in order to couple with the 'corner post' vertical frame members.

The interlocking elements of any of the above examples may be particularly advantageous for vertical farming systems. In particular, the interlocking element facilitates a modular stacking arrangement (i.e., two or more modules horizontally adjacent to one another) in a vertical column of a grid, such that farming produce or growth boards, such as containers containing growing organisms, maybe more efficiently stacked alongside accessory farming modules (such as water tanks, heat sources, and/or light sources).

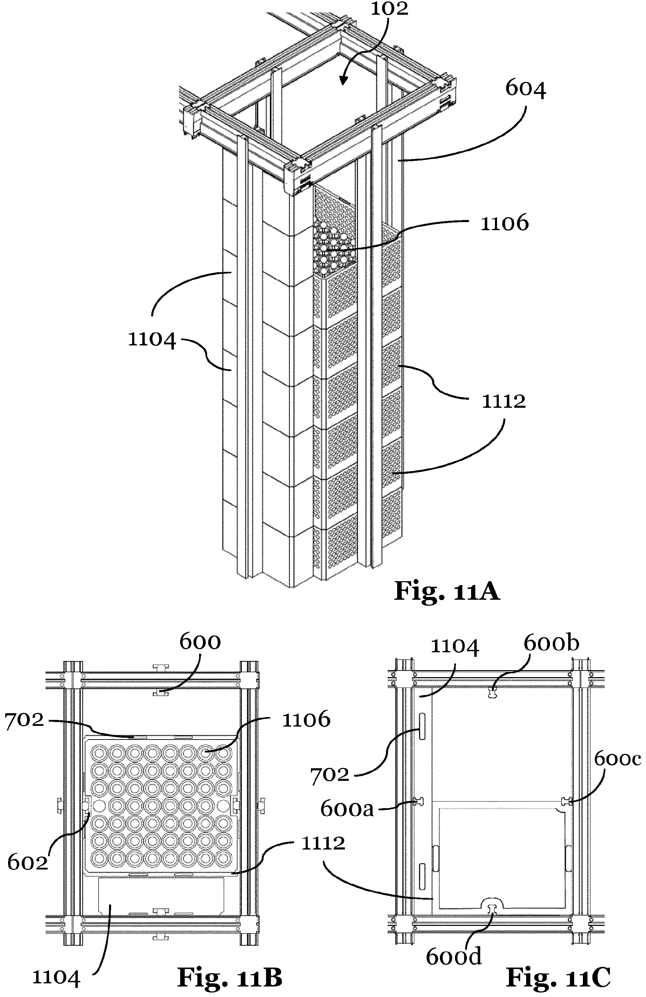

As shown in Fig. 11A, a vertical column 102 is configured in a similar manner to as described above with reference to Fig. 7A, i.e., comprising four vertical frame members 604 arranged on each side of the vertical column 102. The four frame members accommodate a stack of modules, and together allow for up to four stackable modules to be secured adjacent to one another in the same horizontal plane. As best illustrated in Fig. 11B, which shows a top view of the vertical column 102 of Fig. 11A, the vertical column 102 comprises a central stack of containers 1112 which contain growing organisms 1106 for a vertical farming system. The containers 1112 comprise two recesses 602, which couple with corresponding protrusions 600 on opposite faces in the vertical column. The containers 1112 are shaped to allow space for inserting and storing modules 1104 on either side of the container 1112, i.e., horizontally adjacent to the containers 1112. The modules 1104 maybe any accessory farming module, such as a light source, a heat source, or a fluid source. By storing the modules 1104 and containers 1112 in the same vertical column 102, the modules may be stored in close contact with the growing organisms for a more compact and efficient vertical farming system, and both the modules 1104 and the containers 1112 may be accessed and rearranged independently of each other.

It will be appreciated that various modifications may be made to the vertical farming setup and vertical column configuration as necessary to suit specific needs of different systems. Such modifications can be implemented, for example, by changing the number of vertical frame members and or the configuration of stackable modules within the vertical column 102. Fig. 11C illustrates an alternative vertical farming arrangement, in which a module 1104 is secured to a protrusion 600a positioned on the long axis of the rectangular vertical column 102. A container 1112 is secured to another protrusion 600d, such that it contacts the module 1104. The container 1112 fills less than 50% of the surface area in a horizontal plane, such that another container (not shown) may be secured to protrusion 600b and stored alongside the container 1112. If one of the protrusions is not in use as an interlocking element, such as protrusion 600c in this illustrated example, the protrusion may still function as a support for a container 1112.

By securing the containers 1112 and the modules 1104 in distinct stacks within a vertical column 102, the modules 1104 may be replaced or accessed without unnecessary handling of the growing organisms 1106. Similarly, the containers 1112 may be accessed and retrieved more efficiently and without the need to rearrange the accompanying farming modules 1104.

The interlocking elements of any of the above examples may also be implemented in stacker frame systems, such as the stacker frames discussed above with reference to Fig. 5. Example stacker frames 500, such as those illustrated in Fig. 5, are shown in more detail in Fig. 12A. Each of the stacker frames 500 has an open top end 502 for allowing a smaller storage container 504 to pass into the stacker frame 500. As already noted, each stacker frame 500 is configured to accommodate a plurality of such smaller storage containers 504 stored one on top of another in a vertical stack within the stacker frame 500. Each stacker frame 500 is therefore configured to support the lowermost storage container 504 within the stacker frame 500. One or more further storage containers 504 are then placed on top of the lowermost storage container 504, with each container 504 supporting the container placed above it. The storage containers 504 stored within stacker frame 500 may correspond to the containers 112 of Fig. 1, or may be any other specially designed stackable modules configured for storing within a stacker frame 500.

Each stacker frame 500 comprises a bottom end 506, for supporting a lowermost storage container 504. In this implementation, connecting recesses 510 are arranged at the top end 502 within opposing side walls 508. The connecting recesses 510 are arranged such that they are accessible and protrude above the top of the uppermost storage container 504 in the stack of storage containers 504 within each stacker frame 500 when the stacker frame 500 is full. The recesses 510 enable the stacker frames 500 to be placed into and lifted out of a vertical column of the grid 100, e.g., in a similar manner to ordinary storage containers 112 as described in relation to Fig. 1. Nevertheless, it will be appreciated that a variety of modifications may be made to the container-handling vehicles 202, 204 to enable them to better interact with stacker frames 500 and the containers 504 stored within stacker frames, or other suitable mechanisms which are known in the art may be provided additionally or alternatively for the same purpose.

Figs. 12B-D illustrate a stacker frame 1202 which implements an interlocking element. In particular, as best illustrated in Fig. 12B, the stacker frame 1202 comprises a vertical frame member 1204 positioned on an interior of each of the side walls 508 of the stacker frame 1202. The vertical frame members 1204 are provided with an interlocking element 600, in this example in the form of a T-shape protrusion, which is configured to receive, couple with, and secure, a complementary recess 602 of a storage container 612. The protrusion 600 resists horizontal movement of a coupled storage container 612, and therefore facilitates the secure stacking of storage containers 612 within the stacker frame 1202, as illustrated in Fig. 12D. Hence, vertical frame member 1204 of the stacker frame 1202 functions in the same manner as vertical frame member 604 of column 102 described previously.

Fig. 12C illustrates a top view of the stacker frame 1202, in which two storage containers 612 are secured horizontally adjacent to one another. The two storage containers 612 comprise recesses 602, which are coupled to the protrusion 600 of the stacker frame 1202. Although only two storage containers are shown, it will be appreciated that the stacker frame is configured to receive a variety of configurations of differently or similarly sized storage containers in the same horizontal plane and in vertical stacks. In particular, storage containers 612 of various sizes may couple to a respective one or more of the four protrusions 600 positioned along the interior side walls 508 of the stacker frame 1202.

The stacker frame 1202 has substantially the same external configuration as the stacker frame 502, and therefore may be handled by robotic vehicles in the same manner as stacker frame 502, stored in a similar storage grid (such as illustrated in Fig. 5), and otherwise configured similarly to the stacker frame 502.

Alternatively, although not illustrated, the stacker frame may be configured similarly to the stackable modules discussed in above and shown in, e.g., Fig. 7B or Fig. 9A. In particular, the stacker frame 1202 may be provided with a further interlocking element (not shown) on an exterior side of the side wall 508 of the stacker frame 1202. The further interlocking element is configured to couple with a complementary interlocking element of a vertical frame member of a vertical column, as described with reference to Figs. 7B and 9A. If interlocking elements are provided on both interior and exterior walls of the stacker frame 1202, the interlocking elements may advantageously be overlapped. For example, a recess on an exterior wall of a stacker frame may simultaneously provide a protrusion on the interior wall of the stacker frame, and both the exterior recess and interior protrusion may be used independently for their respective interlocking functions on opposite faces of the side wall.

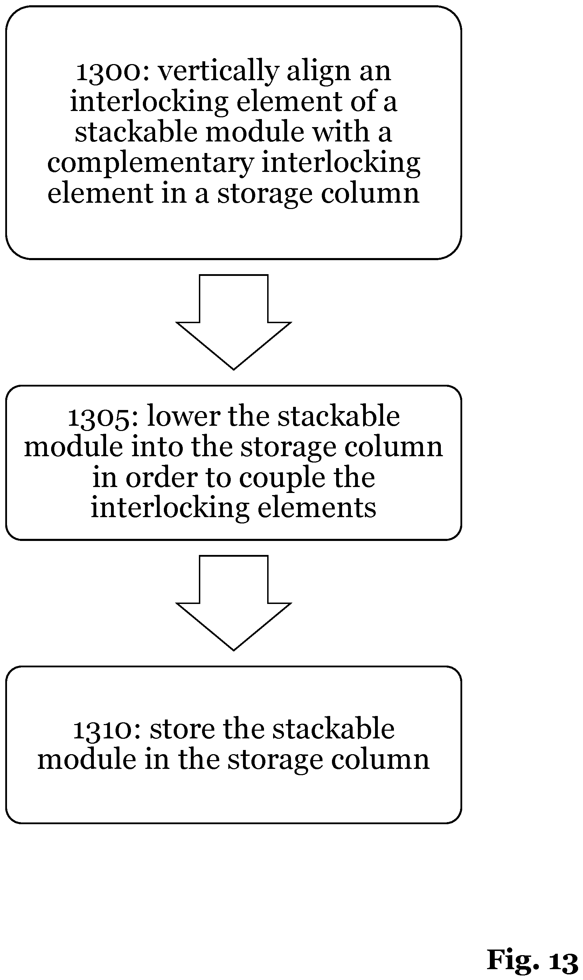

In any of the examples and implementations discussed above, stackable modules may be stacked in a storage grid using the method of Fig. 13. In particular, the flowchart of Fig. 13 relates to a method of stacking, using a robotic vehicle, a stackable module having an interlocking element (e.g., any of the interlocking elements discussed above) in a vertical column of a storage grid. The stackable module may either be securable to a vertical frame member of the storage grid framework (such as shown in Fig. 6A), or to a vertical frame member of a multi-container frame (such as shown in Fig. 12D).

At step 1300, the method comprises vertically aligning an interlocking element of a stackable module with a complementary interlocking element in a vertical column. Vertically aligning the interlocking elements of the stackable module and the vertical column may comprise guiding a robotic vehicle carrying the stackable module to a location above an access opening of the storage grid, and aligning the stackable module with the access opening and with the interlocking element of the vertical column using any method known in the art. Preferably, the robotic vehicles are designed to hold the stackable modules in a position such that, when the robotic vehicle is stationary directly above the access opening of the grid, the interlocking element of the stackable module is held in vertical alignment above the interlocking element of the vertical frame member. To achieve this, the robotic vehicle may be specifically designed to match the stackable module, or alternatively the robotic vehicle may be designed to accommodate multiple stackable modules of different (known) sizes, such as described in NO20221359.

At step 1305, the method comprises lowering the stackable module into the vertical column. The lowering is preferably carried out by the lifting device of a robotic vehicle, which may grip the stackable module, such as by engaging a suitably configured part of the stackable module.

By lowering the stackable module into the vertical column, the interlocking element of the stackable module can couple with the interlocking element of the vertical frame member (e.g., of the stacker frame or of the vertical column). The 'lowering' step may happen simultaneously with, or sequentially with, the 'coupling' step. For example, if the complementary interlocking elements comprise a horizontal protrusion and a horizontal groove respectively, coupling happens as a result of the previous alignment step to align one element above the other. Subsequently, as the stackable module is lowered, the groove slots into the recess (or vice versa), thus coupling the interlocking elements. The stackable module may then be lowered further, until it reaches a desired location at the top of a stack of stackable modules in the vertical column, or in the multi-container frame.

At step 1310, the robotic vehicle disengages or retracts, and the stackable module is stored in the vertical column. The stackable module remains secured to the vertical frame member after the robotic vehicle has released grip and moved away due to the coupling of the respective interlocking elements, as necessary. If the stackable module is later targeted for handling, the module may be removed from the storage grid in a similar manner as with the normal storage containers of Fig. 1. In particular, by lifting the stackable module out of the vertical column, the interlocking elements decouple, and the stackable module is free to be rearranged or retrieved from the grid.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A storage grid for an automated storage and retrieval system, the storage grid comprising:
a vertical column for stacking stackable modules, the vertical column comprising a vertical frame member,
wherein the vertical frame member comprises an interlocking element, and
wherein the interlocking element is configured to couple with a complementary interlocking element on a stackable module in order to secure the stackable module to the vertical frame member when the stackable module is stored in the vertical column.

2. The storage grid of claim 1, wherein:
a.) the interlocking element comprises a protrusion, and wherein the interlocking element is configured to couple with a recess of the complementary interlocking element; and/or
b.) the interlocking element comprises a recess, and wherein the interlocking element is configured to couple with a protrusion of the complementary interlocking element.

3. The storage grid of claim 2, wherein the protrusion and recess are shaped to resist movement in a horizontal plane when the vertical frame member and the stackable module are coupled.

4. The storage grid of any preceding claim, wherein the vertical column comprises one vertical frame member.

5. The storage grid of any of claims 1 to 3, wherein the vertical column comprises two or more vertical frame members, optionally spaced along a perimeter of the vertical column.

6. The storage grid of any preceding claim, the storage grid comprising a first vertical column and a second vertical column,
wherein the vertical frame member comprises two interlocking elements, and wherein the first interlocking element is provided in the first vertical column, and the second interlocking element is provided in the second vertical column.

7. A stackable module for stacking in a vertical column of an automated storage and retrieval system, the stackable module comprising:
an interlocking element on an exterior wall of the stackable module,
wherein the interlocking element is configured to couple with a complementary interlocking element of a vertical frame member to secure the stackable module to the vertical frame member when the stackable module is stored in the vertical column.

8. The stackable module of claim 7, wherein either:
a.) the interlocking element comprises a protrusion extending out from the exterior wall of the stackable module; and/or
b.) the interlocking element comprises a recess extending into the stackable module.

9. The stackable module of any of claims 7 to 8, wherein the stackable module is a vertical farming module, such as a growth board, a light source, a heat source, or a fluid source.

10. The stackable module of any of claims 7 to 9, wherein the stackable module is a multi-container frame, comprising:
a second interlocking element on an interior wall of the multi-container frame,
wherein the second interlocking element is configured to couple with a complementary interlocking element of a second stackable module to secure the second stackable module inside the multi-container frame when the second stackable module and the multi-container frame are stored in the vertical column.

11. A multi-container frame for stacking in a vertical column of an automated storage and retrieval system, the multi-container frame comprising:
a vertical frame member on an interior wall of the multi-container frame, the vertical frame member comprising an interlocking element,
wherein the interlocking element is configured to couple with a complementary interlocking element of a stackable module to secure the stackable module to the multi-container frame when the stackable module is stored in the multi-container frame.

12. An automated storage and retrieval system comprising a storage grid according to any of claims 1-6 and a stackable module according to any of claims claim 7-10.

13. The system according to claim 12, wherein a horizontal surface area of the stackable module is less than a horizontal surface area of the vertical column.

14. The system according to claim 13, wherein two or more stackable modules are stackable horizontally adjacent in the same vertical column.

15. A method of stacking stackable modules in a storage grid, wherein the stackable module is according to any of claims 7 to 10, the method comprising:
vertically aligning an interlocking element of the stackable module with a complementary interlocking element of a vertical frame member; and
lowering the stackable module in order to couple the interlocking element with the complementary interlocking element and secure the stackable module in the vertical column.

16. The method of claim 15, further comprising coupling an interlocking element of a second stackable module with a complementary interlocking element of a second vertical frame member, and securing the second stackable module horizontally adjacent to the first stackable module in the same vertical column.
